# FASCICULE DE BREVET EUROPEEN

(11) **EP 1 085 245 B1**
(45) Date de publication et mention de la délivrance du brevet: **09.02.2005**
(21) Numéro de dépôt: 00402509.4
(22) Date de dépôt: 12.09.2000
(51) Int. Cl.: F16L 19/02

(54) **Moyens de connexion d'une canalisation à un corps tubulaire**
Verbindungsmittel für Anschliessen eines Rohres an röhrenförmigen Körper
Means for connecting a pipe to a tubular body

(30) Priorité: 20.09.1999 FR 9911738
(43) Date de publication de la demande: 21.03.2001
(73) Titulaire: LEGRIS S.A., F-35000 Rennes (FR)
(72) Inventeur: Guivarc'h, Olivier, 35000 Rennes (FR)
(74) Mandataire: Robert, Jean-Pierre

(56) Documents cités:
- EP-A- 0 545 469
- FR-A- 1 334 545
- US-A- 1 675 808
- US-A- 1 703 696
- US-A- 5 348 351

## Description

La présente invention concerne des moyens de connexion d'une canalisation à un corps tubulaire selon le préambule de la revendication 1 (voir, par exemple, le document FR-A- 1 334 545). De tels moyens de connexion sont par exemple destinés à être utilisés dans des circuits de fluide sous pression pour raccorder deux éléments du circuit entre eux, tel que des canalisations, le corps tubulaire pouvant être un raccord entre deux canalisations ou un embout de raccordement d'une canalisation à un organe fonctionnel dont il est solidaire.

On connaît des dispositifs de raccordement de deux canalisations comportant une union formée d'un corps tubulaire ayant deux extrémités par lesquelles une extrémité de chaque canalisation est destinée à être introduite dans l'union. Le dispositif de raccordement comprend également deux manchons vissés chacun sur une extrémité du corps tubulaire pour déformer, entre un épaulement interne du manchon et l'extrémité du corps tubulaire, une rondelle à griffes d'un état de repos dans lequel la rondelle à griffes est conique et a un diamètre interne supérieur au diamètre externe de la canalisation vers un état de déformation dans lequel la rondelle à griffes est aplatie et a un diamètre interne inférieur au diamètre externe de la canalisation de manière à mordre la surface externe de celle-ci. Le positionnement axial des canalisations dans le corps tubulaire est généralement assuré par l'intermédiaire d'épaulements annulaires agencés dans le corps tubulaire pour former des butées à l'enfoncement des canalisations dans l'union. Lorsque deux canalisations d'un circuit sont reliées l'une à l'autre et aux autres éléments du circuit par de tels dispositifs de raccordement, le retrait d'une des canalisations, par exemple pour la remplacer, nécessite, après le retrait des manchons, de pouvoir écarter l'un de l'autre les deux dispositifs de raccordement afin d'extraire les extrémités de la canalisation hors des corps tubulaires de ces dispositifs. Un tel démontage est difficilement réalisable dans un circuit relativement complexe dont certains éléments peuvent en outre être fixés sur des supports.

L'invention propose des moyens de connexion d'un nouveau type fournissant une alternative simple aux moyens existants et permettant lors d'une implantation dans un circuit de dégager latéralement un élément relié au circuit.

A cet effet, on prévoit, selon l'invention, des moyens de connexion d'une canalisation à un corps tubulaire ayant une extrémité agencée pour recevoir une extrémité de la canalisation, les moyens de connexion comprenant un manchon divisé en des première et deuxième parties axialement successives pourvues de moyens pour assurer la liaison étanche et démontable de ces parties respectivement à l'extrémité du corps tubulaire et à la canalisation, et une bague amovible de butée pourvue de moyens de son blocage axial sur la canalisation en retrait de l'extrémité de celle-ci pour constituer un épaulement de butée à l'enfoncement de la canalisation dans le corps tubulaire et un épaulement de butée axiale entre la deuxième partie du manchon et la canalisation, le corps étant agencé pour, après dégagement de la bague de sa position en retrait, pouvoir être enfilé sur la canalisation.

Grâce à cette disposition de bague de butée amovible, les démontages de canalisations ou d'organes dans un circuit de fluide sous pression sont devenus plus commodes. En effet, il suffit de désolidariser un ou les manchons du ou des corps tubulaires correspondants pour découvrir les bagues de butée et ainsi y accéder pour les débloquer des canalisations sur lesquelles elles sont implantées. Il n'existe plus alors d'obstacles au coulissement relatif de tous les composants de la liaison, ce qui permet de disposer d'une plus grande liberté de manoeuvre relative de ces composants pour leur emboîtement et déboîtement.

Selon un mode de réalisation particulier, la bague de butée est radialement expansible et a une surface interne en saillie de laquelle s'étend au moins un crampon de son blocage axial sur la canalisation, le crampon étant destiné à être reçu dans un logement ménagé de façon correspondante dans la paroi de la canalisation. Le blocage axial de la bague de butée sur le tube est réalisé aisément et peut être aussi aisément rompu.

De préférence, la bague de butée comprend deux demi-bagues réunies par un anneau élastique reçu dans une gorge périphérique des demi-bagues. Les deux demi-bagues peuvent de la sorte être écartées l'une de l'autre de façon élastique permettant ainsi la mise en place de la bague de butée sur la canalisation et le déplacement de la bague de butée en dégageant le crampon hors du logement.

D'autres caractéristiques et avantages de l'invention ressortiront à la lecture de la description qui suit d'un mode de réalisation particulier non limitatif de l'invention.

Il sera fait référence aux dessins annexés, parmi lesquels :

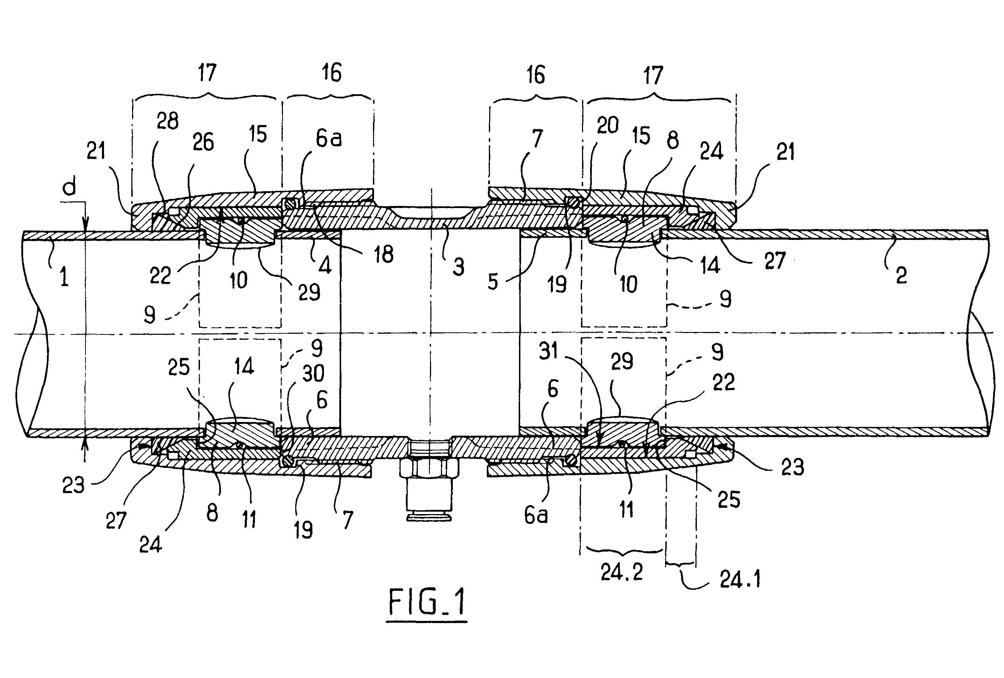

- la figure 1 est une vue en coupe longitudinale du raccordement de deux canalisations par un dispositif de connexion conforme à l'invention,
- la figure 2 est une vue analogue à la figure 1 de ce dispositif de connexion au cours de la déconnexion d'une des deux canalisations,

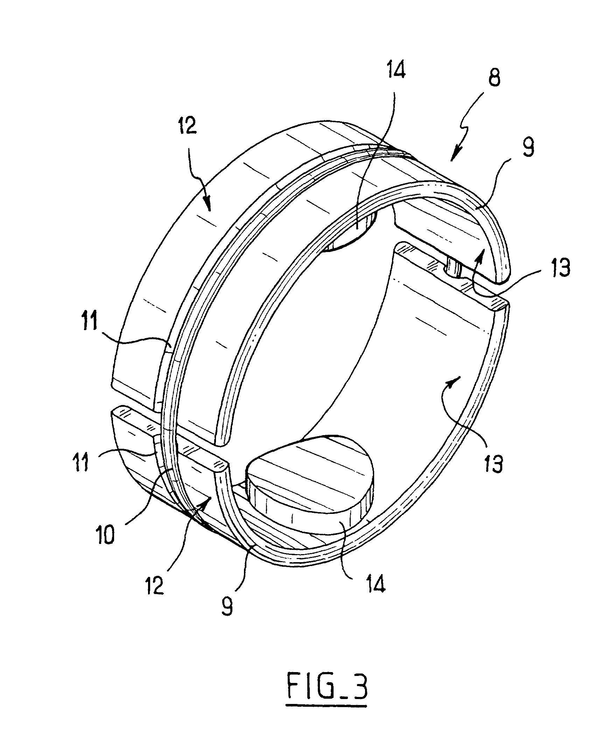

- la figure 3 est une vue en perspective d'une bague de butée d'un dispositif de connexion conforme à l'invention.

L'invention telle qu'elle va maintenant être décrite est plus particulièrement adaptée au raccordement de deux canalisations 1, 2 l'une à l'autre par l'intermédiaire d'un corps tubulaire généralement désigné en 3 formant une union dans lequel une portion d'extrémité 4, 5 de chaque canalisation 1, 2 est engagée. Il va de soi que l'invention est également applicable au raccordement d'une canalisation à un organe fonctionnel, tel qu'un filtre, un détendeur, une vanne, un distributeur, le corps tubulaire étant alors un embout solidaire de l'organe.

En référence aux figures, le corps tubulaire 3 formant l'union posséde deux extrémités opposées 6 par lesquelles les portions d'extrémité 4, 5 des canalisations 1, 2 y sont introduites. Chaque extrémité 6 du corps tubulaire 3 comporte un filetage externe 7. Le corps tubulaire 3 comprend en outre un orifice latéral de purge obturé par un bouchon. Le corps tubulaire 3 pourrait par exemple comprendre au lieu de l'orifice de purge un conduit transversal de piquage pour former une dérivation.

Le dispositif de connexion selon l'invention comprend également une bague de butée généralement désignée en 8 formée de deux demi-bagues 9 réunies par un anneau élastique 10. Les demi-bagues 9 sont réalisées en métal ou en un matériau thermoplastique rigide. L'anneau élastique 10 est réalisé en élastomère et est reçu dans une gorge périphérique 11 ménagée sur la surface externe 12 de chaque demi-bague 9 de manière que l'anneau élastique 10 s'étende légèrement en saillie de la surface externe 12. Chaque demi-bague 9 a une surface interne 13 en saillie de laquelle s'étend un crampon 14. Lorsque l'anneau élastique 10 est dans un état de repos, la bague de butée 8 a un diamètre interne au niveau de la surface interne 13 sensiblement égal au diamètre externe d de la canalisation 1,2 correspondante ou légèrement inférieur à celui-ci. Puisque l'anneau 10 est élastique on peut écarter les crampons 14 l'un de l'autre pour pouvoir glisser la bague 7 par dessus la canalisation 1, 2.

Le dispositif de connexion comprend en outre, pour chaque extrémité 6 du corps tubulaire 3, un manchon généralement désigné en 15 divisé en deux parties axialement successives 16 et 17, ayant des moyens pour assurer leur liaison étanche et démontable respectivement avec une extrémité 6 du corps tubulaire 3 et avec la canalisation correspondante reçue dans le corps tubulaire 3.

La partie 16 de chaque manchon 15 comporte ainsi du côté de son extrémité libre un taraudage 18 destiné à coopérer avec le filetage 7 du corps tubulaire 3 et une gorge 19 adjacente à la partie 17 pour recevoir un joint torique 20 s'étendant légèrement en saillie hors de la gorge 19.

La partie 17 de chaque manchon 15 comprend une extrémité libre 21 délimitant une ouverture de diamètre sensiblement égal au diamètre externe de la canalisation et un logement 22 de diamètre supérieur à celui de l'ouverture se raccordant à celle-ci par un épaulement 23 et s'étendant à l'opposé jusqu'à la gorge 19.

Le logement 22 reçoit à coulissement un piston 24 comportant du côté de l'extrémité 21 une section 24.1 ayant un diamètre interne sensiblement égal au diamètre externe de la canalisation et une section 24.2 définissant un chambrage, ouvert axialement, qui est limité du côté de la section 24.1 par une face radiale 25 tournée en direction de la bague 8 et qui a un diamètre interne sensiblement égal au diamètre externe de la bague de butée 8 lorsqu'elle équipe la canalisation. L'extrémité libre 26 de la section 24.1 a une forme intérieure conique s'évasant dans une direction opposée à la section 24.2. Cette extrémité libre 26 définit avec l'épaulemenc 23 du manchon 15 un logement annulaire de volume variable.

Un élément annulaire d'étanchéité 27 en élastomère est disposé dans le logement de volume variable. L'élément annulaire d'étanchéité 27 est élastiquement déformable et a au repos un diamètre interne sensiblement égal ou légèrement supérieur au diamètre externe de la canalisation et possède une extrémité biseautée 28 s'étendant du côté de l'extrémité libre 26 du piston 24.

Préalablement au raccordement des deux tronçons de canalisation 1, 2, un manchon 15 (équipé du piston 24 et des joints 20 et 27) et une bague de butée 8 sont successivement enfilés sur la portion d'extrémité 4, 5 de la canalisation 1, 2 correspondante de telle manière que les crampons 14 soient reçus dans des logements 29 ménagés dans la paroi de la canalisation 1,2 au voisinage de son extrémité. Les logements en question sont ici des perçages transversaux mais peuvent être également des renfoncements.

Les portions d'extrémité 4,5 des canalisations 1,2 sont ensuite introduites successivement dans le corps tubulaire 3 jusqu'à ce que les bagues de butée 8 viennent en appui contre les extrémités 6 de celui-ci. Les manchons 15 sont ensuite ramenés sur les extrémités 6 du corps tubulaire 3 et les parties 16 de ceux-ci sont vissées sur les filetages 7. Les bagues de butée 8 sont alors reçues dans les chambrages des sections 24.2 des pistons 24.

Au cours du vissage de chaque manchon 15 sur le corps tubulaire 3, l'extrémité libre 30 de la section 24.2 du piston 24 de chaque manchon 15 vient en butée contre l'extrémité 6 correspondante du corps tubulaire 3 et/ou la face radiale 25 du chambrage du piston vient en butée contre la bague de butée 8 provoquant ainsi le coulissement du piston 24 dans le logement 22 qui vient comprimer l'élément annulaire d'étanchéité 27 et appliquer celui-ci contre la surface externe de la canalisation correspondante par la coopération des surfaces externe et interne coniques des extrémités 28 et 26 de ceux-ci. L'étanchéité du raccordement est assurée par le joint 20 portant sur une portée 6a de l'extrémité 6 du corps tubulaire 3 située en avant du filetage 7, par l'anneau élastique 10 pressé contre la surface cylindrique interne 31 du chambrage de la section 24.2 du piston 24, et par l'élément annulaire d'étanchéité 27 comprimé entre l'extrémité libre 26 de la section 24.1 du piston 24, l'épaulement 23 du manchon 15 et la surface externe de la canalisation correspondante.

La déconnexion des canalisations 1 et 2 est réalisée en dévissant les manchons 15 montés sur le corps tubulaire 3 dans lequel les extrémités 4 et 5 des canalisations sont insérées. On remarquera que, si le circuit est toujours sous pression, une fuite se produit au niveau de l'élément annulaire d'étanchéité 27 dès le début du dévissage du manchon 15 alertant ainsi l'opérateur.

Une fois ces manchons 15 dévissés, la bague de butée 8 montée sur l'extrémité 4 de la canalisation 1 est éloignée du corps tubulaire 3 correspondant en écartant les demi-bagues 9 pour dégager les crampons 14 des logements 29 et en faisant coulisser celles-ci le long de la canalisation correspondante. Le corps tubulaire 3 peut alors être déplacé le long de la canalisation 1 de façon suffisante pour dégager l'extrémité 5 de la canalisation 2.

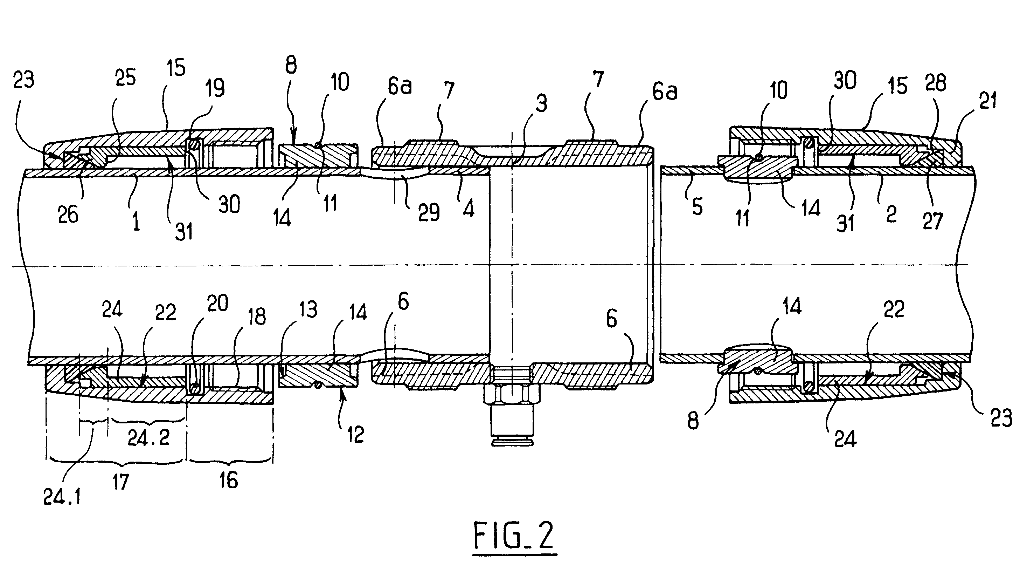

La figure 2 illustre cet état de déconnexion qui peut être réalisé de la même manière à l'autre extrémité de la canalisation 2, ce qui permet de retirer latéralement la canalisation 2 du circuit. On notera que si la canalisation possède une flexibilité suffisante, la déconnexion de son autre extrémité peut être réalisée par le dévissage unique du manchon qui la raccorde au corps correspondant, la flexion permettant son extraction axiale de ce corps.

On remarquera que lorsque le circuit est sous pression au moment du dévissage des manchons 15, le corps tubulaire 3 est maintenu en position sur les extrémités de canalisation par l'intermédiaire des bagues de butée 8 évitant ainsi un déplacement brutal incontrôlé donc dangereux des composants de la connexion.

On notera par ailleurs que le joint 20 assure le maintien du piston 24 dans le logement 22 lorsque le manchon 15 est démonté.

Bien entendu l'invention n'est pas limitée au mode de réalisation décrit et on peut y apporter des variantes de réalisation sans sortir du cadre de l'invention tel que défini par les revendications.

En particulier, ce n'est pas sortir du cadre de l'invention que de prévoir à la place d'une liaison filetée entre le manchon 15 et le corps tubulaire 3 une autre liaison par exemple par emmanchement qui serait maintenu au moyen d'un bridage extérieur entre la bague de butée 8 et une collerette que comporterait en correspondance l'extrémité 6 du corps tubulaire 3.

En outre, le manchon peut avoir une conception monobloc sans piston 24.

Enfin, la bague de butée 8 peut comprendre tout moyen adapté pour permettre son blocage axial sur la canalisation de façon amovible aux lieu et place des crampons (par exemple un moyen de serrage). La bague de butée 8 peut en outre être réalisée en une seule pièce comprenant des portions élastiquement déformables, ou des crampons escamotables.

Par ailleurs, l'anneau élastique 10 est facultatif, les demi-bagues pouvant n'être maintenues que par la surface interne du logement ménagé dans le manchon.

## Revendications

1. Moyens de connexion d'une canalisation (1, 2) à un corps tubulaire (3) ayant une extrémité (6) agencée pour recevoir une extrémité de la canalisation, les moyens de connexion comprenant un manchon (15) divisé en des première et deuxième parties (16, 17) axialement successives pourvues de moyens pour assurer la liaison de ces parties étanche et démontable respectivement à l'extrémité du corps tubulaire et à la canalisation, où les moyens de connexion comprennent une bague amovible de butée (8) pourvue de moyens (14) de son blocage axial sur la canalisation en une position en retrait de l'extrémité de la canalisation pour constituer un épaulement de butée axiale entre la deuxième partie (17) du manchon et la canalisation, **caractérisés en ce que** la bague et les moyens de blocage sont agencés pour que la bague constitue un épaulement de butée à l'enfoncement de la canalisation dans le corps tubulaire, et le corps est agencé pour, après dégagement de la bague de sa position en retrait, pouvoir être enfilé sur la canalisation.

2. Moyens de connexion selon la revendication 1, **caractérisés en ce que** la bague de butée (8) est radialement expansible et a une surface interne en saillie de laquelle s'étend au moins un crampon (14) de son blocage axial sur la canalisation, le crampon étant destiné à être reçu dans un logement (29) ménagé de façon correspondante dans la paroi de la canalisation.

3. Moyens de connexion selon la revendication 2, **caractérisé en ce que** la bague de butée (8) comprend deux demi-bagues (9) réunies par un anneau élastique (10) reçu dans une gorge périphérique (11) ménagée dans la surface externe (12) des demi-bagues.

4. Moyens de connexion selon l'une quelconque des revendications 1 à 3, **caractérisés en ce qu'**ils comportent un piston annulaire (24) monté coulissant dans la deuxième partie (17) du manchon (15) présentant une face radiale (25) tournée du côté de la bague et une extrémité opposée (26) à cette face qui délimite avec un épaulement interne (23) de la deuxième partie (17) du manchon (15) un logement annulaire de volume variable pour un joint annulaire (27) déformable.

5. Moyens de connexion selon la revendication 4, **caractérisés en ce que** le piston (24) présente un chambrage cylindrique dans lequel la bague de butée (8) est au moins partiellement logée lorsque la connexion est réalisée.

6. Moyens de connexion selon la revendication 5, **caractérisés en ce que** l'anneau élastique (10) de la bague de butée (8) s'étend en saillie de sa surface externe pour être en contact avec la surface interne cylindrique (31) du chambrage.

7. Moyens de connexion selon l'une des revendications précédentes, **caractérisés en ce que** la première partie (16) du manchon comporte un joint annulaire (20) d'étanchéité logé dans une gorge (19) de celle-ci et destiné à coopérer avec une surface cylindrique (6a) externe du corps tubulaire (3).

## Patentansprüche

1. Vorrichtung zum Verbinden einer Rohrleitung (1, 2) mit einem rohrförmigen Körper (3), der ein Ende (6) hat, das dazu vorgesehen ist, ein Ende der Rohrleitung aufzunehmen, wobei die Verbindungsvorrichtung eine Hülse (15) umfasst, die entlang ihrer Achse aufeinanderfolgend in einen ersten und einen zweiten Abschnitt (16, 17) geteilt ist, die mit Mitteln ausgestattet sind, welche die dichte und lösbare Verbindung dieser Abschnitte mit dem Ende des rohrförmigen Körpers einerseits und der Rohrleitung andererseits sicherstellen, wobei die Verbindungsvorrichtung einen abnehmbaren Anschlagring (8) umfasst, der über Mittel (14) zu seiner axialen Blockierung an der Rohrleitung in einer gegenüber dem Ende der Rohrleitung zurückversetzten Position verfügt, um eine Anschlagschulter in Achsenrichtung zwischen dem zweiten Abschnitt (17) der Hülse und der Rohrleitung zu bilden, **dadurch gekennzeichnet, dass** der Ring und die Blockiermittel derart ausgebildet sind, dass der Ring eine Anschlagschulter gegenüber dem Eindrücken der Rohrleitung in den rohrförmigen Körper bildet und der Körper derart ausgebildet ist, dass er nach Lösen des Rings aus seiner zurückversetzten Position auf die Rohrleitung aufgebracht werden kann.

2. Verbindungsvorrichtung nach Anspruch 1, **dadurch gekennzeichnet, dass** der Anschlagring (8) radial dehnbar ist und von seiner Innenfläche zumindest ein Sperrelement (14) zu seiner axialen Blockierung an der Rohrleitung absteht, wobei das Sperrelement dazu vorgesehen ist, in einer in der Wand der Rohrleitung entsprechend ausgebildeten Aussparung (29) aufgenommen zu werden.

3. Verbindungsvorrichtung nach Anspruch 2, **dadurch gekennzeichnet, dass** der Anschlagring (8) zwei Halbringe (9) umfasst, die über einen elastischen Ring (10), der in einer Umfangsnut (11) in der Außenfläche (12) der Halbringe aufgenommen ist, verbunden sind.

4. Verbindungsvorrichtung nach einem der Ansprüche 1 bis 3, **dadurch gekennzeichnet, dass** sie einen Ringkolben (24) umfasst, der verschiebbar in dem zweiten Abschnitt (17) der Hülse (15) aufgenommen ist und eine in Richtung Ring weisende radiale Fläche (25) und ein von dieser Fläche abgewandetes Ende (26) hat, das mit einer inneren Schulter (23) des zweiten Abschnitts (17) der Hülse (15) eine ringförmige Aufnahme veränderlichen Volumens bildet, die eine verformbare Ringdichtung (27) aufnimmt.

5. Verbindungsmittel nach Anspruch 4, **dadurch gekennzeichnet, dass** der Kolben (24) eine zylindrische Aussparung aufweist, in welcher der Anschlagring (8) beim Herstellen der Verbindung zumindest teilweise aufgenommen ist.

6. Verbindungsmittel nach Anspruch 5, **dadurch gekennzeichnet, dass** der elastische Ring (10) des Anschlagrings (8) von dessen Außenfläche absteht, um mit der zylindrischen Innenfläche (31) der Aussparung in Kontakt zu sein.

7. Verbindungsmittel nach einem der vorhergehenden Ansprüche, **dadurch gekennzeichnet, dass** der erste Abschnitt (16) der Hülse ein ringförmiges Dichtungselement (20) umfasst, das in einer Nut in diesem Abschnitt aufgenommen und dazu vorgesehen ist, mit einer äußeren zylindrischen Fläche (6a) des rohrförmigen Körpers (3) zusammenzuwirken.

## Claims

1. Connection means for connecting a pipe (1, 2) to a tubular body (3) having an end (6) arranged to receive one end of the pipe, the connection means comprising a sleeve (15) subdivided into first and second portions (16, 17) in axial succession provided with means for connecting said portions in leakproof and releasable manner respectively to the end of the tubular body and to the pipe, wherein the connection means comprise a removable abutment ring (8) provided with means (14) for locking it axially on the pipe set back from the end thereof to constitute an axial abutment shoulder between the second portion (17) of the sleeve and the pipe, **characterized in that** the abutment ring and locking means are arranged such that the abutment ring constitutes an abutment shoulder when the pipe is engaged in the tubular body, and the body is arranged to be skipped onto the pipe after removing of the abutment ring from its set back position.

2. Connection means according to claim 1, **characterized in that** the abutment ring (8) is radially expansible and has a projecting inside surface from which there extends at least one stud (14) for locking it axially on the pipe, the stud being designed to be received in a housing (29) formed in corresponding manner in the wall of the pipe.

3. Connection means according to claim 2, **characterized in that** the abutment ring (8) comprises two half-rings (9) united by an elastic band (10) received in a peripheral groove (11) formed in the outside surface (12) of the half-rings.

4. Connection means according to any one of claims 1 to 3, **characterized in that** they include an annular piston (24) slidably mounted in the second portion (17) of the sleeve (15) and presenting a radial face (25) directed towards the ring and an end (26) opposite from this face which co-operates with an internal shoulder (23) of the second portion (17) of the sleeve (15) to define an annular housing of variable volume for a deformable annular gasket (27).

5. Connection means according to claim 4, **characterized in that** the piston (24) presents a cylindrical chamber in which the abutment ring (8) is at least partially received when the connection is made.

6. Connection means according to claim 5, **characterized in that** the elastic band (10) of the abutment ring (8) projects from the outside surface thereof so as to come into contact with the inside cylindrical surface (31) of the chamber.

7. Connection means according to any preceding claim, **characterized in that** the first portion (16) of the sleeve includes an annular sealing gasket (20) received in a groove (19) thereof and designed to co-operate with an outside cylindrical surface (6a) of the tubular body (3).
